# EUROPEAN PATENT APPLICATION

(11) **EP 2 416 147 A1**
(43) Date of publication of application: **08.02.2012**
(21) Application number: 10171298.2
(22) Date of filing: 29.07.2010
(51) Int. Cl.: G01N 27/414, G01N 33/543

(54) **Sensor device and manufacturing method**

(71) Applicant: NXP B.V., 5656 AG Eindhoven (NL)
(72) Inventor: Boccardi, Guillaume, Redhill, Surrey RH1 1DL (GB); Lambert, Magali, Redhill, Surrey RH1 1DL (GB)
(74) Representative: Hardingham, Christopher Mark

(57) **Abstract**

Disclosed is a sensor device (10) comprising a substrate (100) carrying a sensing element (110), and a metallization stack on said substrate for providing interconnections to said sensing element, the metallization stack comprising a plurality of patterned metal layers (130a-d) separated by insulating layers (120a-d), wherein a first metal layer (130c) comprises an electrode portion (16) conductively connected to the sensing element, and a further metal layer (130d) facing the first metal layer comprises a reference electrode portion (18), the electrode portion and the reference electrode portion being separated by a fluid channel (14) accessible from the top of the metallization stack. A method of manufacturing such a sensor device is also disclosed.

## Description

### FIELD OF THE INVENTION

The present invention relates to a sensor device comprising a substrate carrying a sensing element, and a metallization stack on said substrate for providing interconnections to said sensing element.

The present invention further relates to a method of manufacturing such a sensor device.

### BACKGROUND OF THE INVENTION

Due to advances in semiconductor technology, it has become feasible to detect single capture events on a sensing surface of sensors that are integrated in a monolithic circuit. An example of such a sensor is disclosed in PCT patent application WO 2009/047703, in which a capture molecule forms an insulating layer of a capacitor, with the plates of the capacitor formed by a conductive sensing surface and a fluid sample respectively. A capture event causes a change in the dielectric constant of the insulating layer including the volume directly above the sensor surface in which a capture event takes place, which affects the capacity of the capacitor. The change in capacitance can be measured, e.g. as a bias on a current through a transistor, as is the case in this application.

An alternative arrangement is disclosed in PCT patent application WO 2008/132656, in which an extended gate field effect transistor is disclosed with capture molecules on the surface of the extended gate, such that the gate potential of the transistor can be altered by capture events.

The sensor electrodes of such sensors may be functionalized with a bioreceptor, i.e. a molecule or compound capable of binding (receiving) a specific analyte of interest, typically some biomolecule, in order to detect single molecule binding events of specific analytes of interest. Moreover, due to the fact that the electrodes can be miniaturized to nm scales, it has become possible to provide a single integrated circuit (IC) with an array of such sensor electrodes, thereby facilitating the performance of a large number of sensor readings in parallel, e.g. by measuring different samples at the same time.

In order to arrive at meaningful readings, such sensor devices typically comprise a counter electrode for providing a reference potential against which the signal derived from the sensor binding event is calibrated. In PCT patent application WO 2009/074926, a sensor arrangement is disclosed in which the measurement electrode is integrated in the top metal layer of the back end of line (BEOL) metallization stack, with the counter electrode provided external to BEOL metallization stack. For instance, in WO 2009/047703, the counter electrode is mounted during the chip packaging process. This however requires additional processing steps and complicates the packaging process. Moreover, the provision of a single counter electrode in the package severely limits the possibility to perform multiple independent capture events in parallel.

In WO 2009/074926, it is proposed to integrate the counter electrode in the top metallization layer of the BEOL metallization stack. This however means that the amount of available space in this top metallization has to be shared between the working electrode connected to the sensing element in the substrate and the counter electrode, thus reducing the maximum possible multiplicity of the sensor device by a factor of around two.

### SUMMARY OF THE INVENTION

The present invention seeks to provide a sensor device that overcomes at least some of the aforementioned disadvantages.

The present invention further seeks to provide a method of manufacturing such a sensor device.

In accordance with a first aspect of the present invention, there is provided a sensor device comprising a substrate carrying a sensing element, and a metallization stack on said substrate for providing interconnections to said sensing element, the metallization stack comprising a plurality of patterned metal layers separated by insulating layers, wherein a first metal layer comprises an electrode portion conductively connected to the sensing element, and a further metal layer facing the first metal layer comprises a reference electrode portion, the electrode portion and the reference electrode portion being separated by a fluid channel accessible from the top of the metallization stack.

Hence, a sensor device is provided in which both the sensor electrode and the counter electrode are integrated in the BEOL metallization stack, with a fluid channel for guiding a sample in between the sensor electrode and the counter electrode separating these electrodes. Consequently, a sensor device is obtained where the density of parallel electrodes can be maximized because a single metal layer does not have to share its area between both electrodes, that is more compact than prior art devices as the sample chamber is also integrated in the BEOL metallization stack and which can be manufactured in standard semiconductor process technologies such as a CMOS process.

Preferably, the further metal layer is further removed from the substrate than the first metal layer, as this means that the distance of the electrode portion to the sensing device is minimized, which minimizes the complexity of the manufacture of the device. More preferably, the further metal layer is the upper metal layer.

In an embodiment, the surface of the electrode portion facing the fluid channel carries at least one bioreceptor. This has the advantage that the sensor device can detect single molecule binding events of specific analytes of interest, e.g. an analyte engaging in a specific 'lock-and-key type' binding event.

In another embodiment, the substrate carries a plurality of sensing elements each conductively connected to a respective electrode portion in the first metal layer. This has the advantage that multiple sensing events can be performed in parallel. Preferably, at least some of the respective electrode portions are located in a separate fluid channel, such that multiple sensing events can be performed in parallel on different samples. To this end, each separate fluid channel may comprise a counter electrode portion facing the electrode portion.

Preferably, the electrode portion and the counter electrode portion are of the same metal to avoid galvanic effects between the two electrodes.

In accordance with a further aspect of the present invention, there is provided method of manufacturing a sensor device, comprising providing a substrate carrying a sensing element; and forming a metallization stack on said substrate for providing interconnections to said sensing element, wherein the step of forming said metallization stack comprises forming a conductive connection through a previously deposited insulation layer to establish a conductive connection with the sensing element; forming a first patterned metal layer over the previously deposited insulation layer, said patterned metal layer including an electrode portion in conductive contact with the conductive connection; depositing a further layer stack including a further insulation layer over the first patterned metal layer, the further insulation layer comprising a sacrificial region over the electrode portion; patterning an upper portion of the further layer stack to form a counter electrode opening to the sacrificial region; filling the counter electrode opening with a second metal, thereby forming a counter electrode portion separated from the electrode portion by the sacrificial region; providing an access to the sacrificial region through at least a part of the further layer stack; and forming a fluid channel between the electrode portion and the counter electrode portion by removing the sacrificial region through said access.

Hence, the method of the present invention leads to a sensor device in which the sensing electrode and the counter electrode, as well as the sample chamber comprising these electrodes are integrated in the BEOL metallization stack without requiring non-standard semiconductor processing steps, thus yielding a cost-effective method for providing such a sensor device.

In an embodiment, the steps of forming a conductive connection through a previously deposited insulation layer and forming a first patterned metal layer comprise depositing an etch stop layer over the previously deposited insulation layer; patterning said etch stop layer to at least form an electrode opening in the etch stop layer; forming the conductive connection through said electrode opening; and filling the electrode opening with a first metal, thereby providing an electrode portion conductively connected to the sensing element through the previously deposited insulation layer. This facilitates the removal of the sacrificial portion by means of an etching step.

Said etching step may be performed by biasing the wafer at 0V during the removal of the sacrificial region, which results in the effective removal of the sacrificial portion from in between the electrode portion and the counter electrode portion.

Alternatively, the sacrificial region may comprise a thermally decomposable material, wherein the step of removing the sacrificial region through said access comprises heating the wafer to above the decomposition temperature of the decomposable material until the decomposable material has fully decomposed. This has the advantage that the use of an etch stop layer may be omitted.

In an embodiment, the substrate carries an array of sensing elements, wherein the method comprises providing an electrode portion to each sensing element; and providing a separate fluid channel for each electrode portion. This way, a sensor device comprising an array of sensors, e.g. a two-dimensional array of sensors, may be provided that can be used for simultaneous measurements of different samples.

The method may further comprise exposing the fluid channel to a composition including a bioreceptor; and adhering the bioreceptor to the electrode portion, such that the sensing electrode becomes sensitive to specific analytes of interest.

### BRIEF DESCRIPTION OF THE EMBODIMENTS

Embodiments of the invention are described in more detail and by way of non-limiting examples with reference to the accompanying drawings, wherein
FIG. 1 schematically depicts a sensor device;
FIG. 2 schematically depicts an intermediate structure after a first step of an embodiment of the method of the present invention;
FIG. 3-7 schematically depict various intermediate structures after subsequent steps of an embodiment of the method of the present invention;
FIG. 8 schematically depicts a top view of a sensor device in accordance with an embodiment of the present invention;
FIG. 9 schematically depicts a cross section of the sensor device along the line A-A'; and
FIG. 10 schematically depicts a cross section of the sensor device along the line B-B'.

### DETAILED DESCRIPTION OF THE DRAWINGS

It should be understood that the Figures are merely schematic and are not drawn to scale. It should also be understood that the same reference numerals are used throughout the Figures to indicate the same or similar parts.

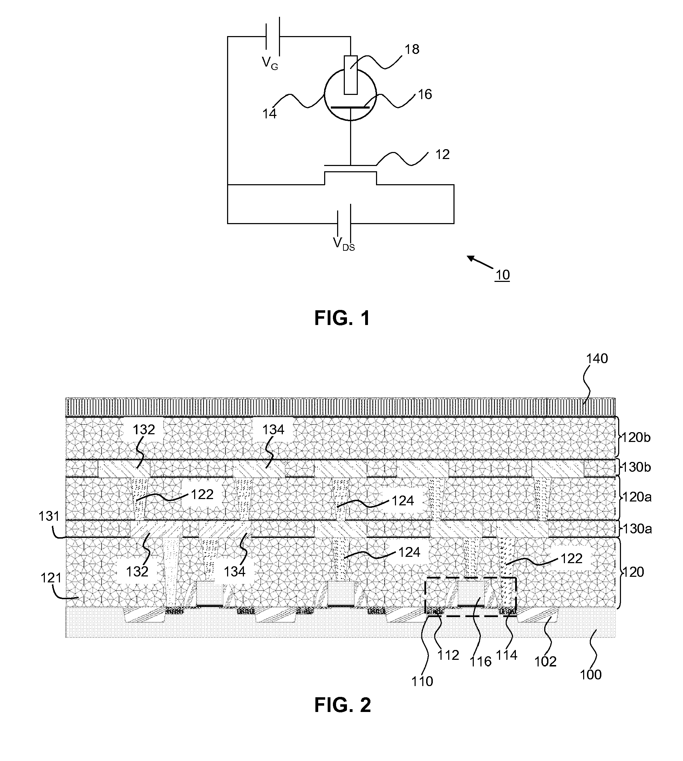

FIG.1 schematically depicts a non-limiting example of a sensor device 10. The sensor device 10 has an active component 12, e.g. a transistor, with its control terminal conductively coupled to a working electrode 16 in a fluid or sample chamber 14. The chamber 14 further comprises a counter electrode 18.

The surface of the working electrode 16 is typically functionalized in order to become sensitive to a particular analyte of interest, which may be a compound indicative of the physical condition of a mammal, e.g. a human. The surface of the working electrode 16 may for instance carry one or more receptor molecules, e.g. antibodies, for forming a specific binding pair with a protein, may carry DNA strand portions for replication purposes and so on. The surface of the working electrode 16 may be functionalized in any suitable manner, e.g. by means of self-assembly. To this end, the working electrode 16 may be made of a metal such as copper, for which it is well-known that it can be used to form self-assembled monolayers (SAMs) on its surface.

In operation, the interaction between an analyte of interest and the functionalized surface of the working electrode 16 affects the gate potential V_{G} of the sensor device 10. This consequently alters the source drain potential V_{DS} of the active component 12, which can be used to detect and quantify the binding event at the surface of the working electrode 16. The interested reader is referred to PCT patent applications WO 2009/047703 and WO 2009/074926 for a more detailed description of the mode of operation of such sensor devices.

It is noted for the avoidance of any doubt that in the present invention, any suitable active component 12 may be used. It is for instance not necessary that the working electrode 16 is electrically connected to the control terminal of the active component 12, e.g. the gate of a MOS transistor. Instead, the working electrode may form a first plate of a sensing capacitor, with the second plate provide by the medium in the fluid chamber 14 and the dielectric in between the plates provided by the functional layer, e.g. SAM, on the working electrode surface. In this case, the reference electrode 16 senses the potential on the second plate of the sensing capacitor. Other embodiments will be apparent to the skilled person.

In accordance with the present invention, a sensor device 10 is provided in which the working electrode 16, the reference electrode 18 and the fluid chamber 14 are all integrated in the BEOL of a chip. This has the advantage that the number of processing steps of manufacturing the sensor device 10 is minimized and that all processing steps are compatible with standard semiconductor process steps, such as for instance a CMOS process. In the following, an embodiment of manufacturing such a sensor device 10 will be given using a CMOS BEOL process by way of non-limiting example. It should be understood that the present invention is equally applicable to the BEOL part of other types of semiconductor processes.

FIG. 2 depicts a first step of an embodiment of the method of the present invention. A substrate 100, e.g. a silicon substrate which may be a monocrystalline substrate, is provided in which active components 110 have been formed. For example, the active components 110 may be nMOS and/or pMOS transistors, each having a source region 112, a drain region 114 and a gate terminal 116 formed over the channel region between the source region 112 and the drain region 114. The various active components 110 may be separated from each other using shallow trench insulations 102. The substrate 100 with active components 110 may take any suitable form, and is not limiting to the present invention. Moreover, since the provision of a substrate 100 with active components 110 is a matter of routine skill for the person skilled in the art, this will not be explained in further detail for the sake of brevity only.

Upon provision of the substrate 100 with the active components 110 and insulating layer 120, in which is sometimes referred to as the front end process, the interconnect structure for interconnecting various active components 110 with each other and providing external contacts to selected active components 110 is commenced. Prior to commencing the BEOL process, the substrate 100 is usually covered in a layer 120 of an insulating material to electrically insulate the substrate 100 and its active components 110 from the interconnect structures to be formed in the BEOL process. In the context of the present invention, the term 'layer' is intended to include single layer structures as well as multi-layer structures serving the same purpose, e.g. a three-layer stack for providing an insulating structure in between two conductive structures will be referred to as a single layer.

For instance, in FIG. 1, the insulating layer 120 may comprise a relatively thick layer of an insulating material 121 and a relatively thin layer of a diffusion barrier material 131 that prevents penetration metallic materials into the insulating material 121.The insulating material 121 may be any suitable insulating material, such as SiO₂ or Si₃N₄. The diffusion barrier material 131 may be any suitable material, such as silicon carbide (SiC). In the BEOL process, the insulating layer 120 is typically opened to form vias therein to underlying parts of the substrate 100, such as via 122 to a source or drain terminal and via 124 to a gate terminal of an active component 110. A first metallization layer 130a is typically formed on top of the insulating layer 120. The metallization layer 130a typically is a layer of conductive portions 132 separated by an insulating material, which may be the same as the insulating material 121 used for the insulating layer 120a. Any suitable conductive material, e.g. metal may be used for the conductive portions 132, and they may be formed in the metallization layer 130a in any suitable manner. For instance, the metallization layer 130a may be formed by depositing the insulating material, opening the insulating material to form the recesses to be filled by the conductive portions 132, 134, forming the vias 122, 124 through these recesses in any suitable manner and finally filling the recesses with the conductive portions 132, 134 in any suitable manner, e.g. by means of a dual Damascene process. The resultant structure may be planarized, e.g. by a chemical mechanical polishing (CMP) step before the first insulating layer 120a of the BEOL process is formed over the first metallization layer 120a.

This process, as is well known, may be repeated a number of times to build up the metallization stack in the BEOL process. In FIG. 2, a first insulating layer 120a electrically insulating two patterned metallization layers 130a, 130b have already been formed. It is reiterated that these layers may be formed in any suitable manner. In accordance with well-established nomenclature, the N^{th} insulating layer will also be referred to as the Via-N layer and the N^{th} metallization layer will also be referred to as the Metal-N layer.

In accordance with an embodiment of the present invention, a second insulating layer 120b is formed by the deposition of a stack of SiC, SiO₂ and SiC by means of plasma-enhanced chemical vapor deposition (PECVD), followed by the deposition of a SiO₂, Si₃N₄ and SiO₂ stack. The SiO₂ layers carry reference numeral 121 whilst the Si₃N₄ layer carries reference numeral 140. It should be understood that these stacks are formed on top of the Metal-2 layer by way of non-limiting example only. They may be formed on any of the metallization layers of a BEOL process.

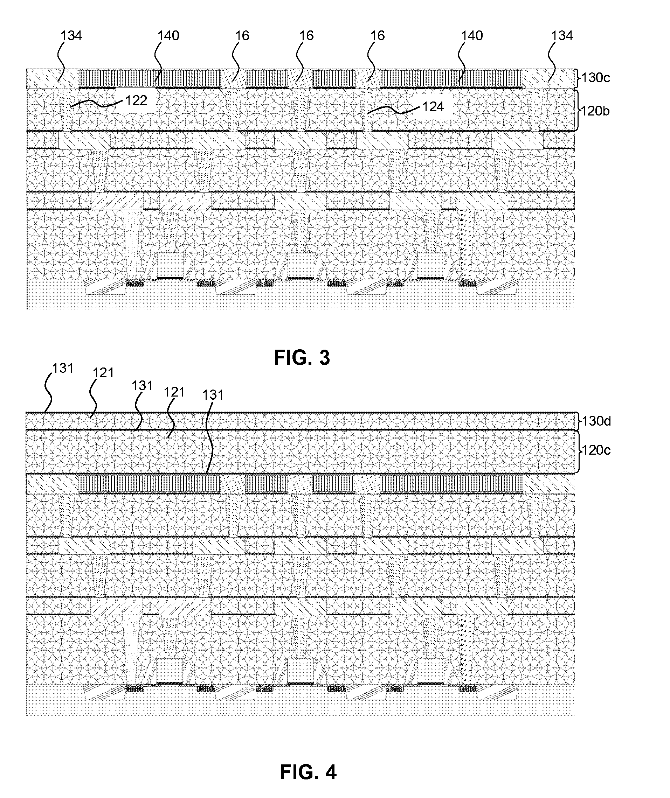

Next, the SiO₂/Si₃N₄/SiO₂ stack is patterned to facilitate the formation of the Via-2 and Metal-3 trenches e.g. by way of a dual-Damascene process, which may involve a photolithography step to define the portions of the SiO₂/Si₃N₄/SiO₂ stack to be removed followed by a dry etch. Vias and trenches are subsequently filled by a metal or a metal stack, e.g. by using Ta/TaN, Ag, Al, Pd, Pt, W and/or Cu. The metal stack may be subsequently planarized, e.g. by means of a CMP step. The resulting structure shown in FIG. 3 has a number of electrode portions 16 as well as some source/drain contacts 134 defined in the metallization layer 130c. In the present example embodiment, the electrode portions 16 are conductively connected to the gate terminals 116 via a number of underlying metal portions 134 and vias 124. The source/drain contacts 134 or drain terminals are conductively connected to the source/drain terminals 112, 114 via a number of underlying metal portions 132 and vias 122.

Next, a first stack consisting of SiC 131 and SiO₂ 121 and a second stack consisting of SiC 131 and SiO₂ 121 are deposited by means of PECVD, as shown in FIG. 4. These stacks define the Via-3 and Metal-4 layers 120c and 130d respectively, as will be apparent from the following. The second stack may be patterned in any suitable manner to facilitate the etching of via trenches into the Via-3 layer 120c, after which via trenches and bond pads are filled by a metal or metal stack, e.g. by using Ta/TaN, Ag, Al, Pd, Pt, W and/or Cu. This may be performed by two separate etching steps, a first etching step in which the respective trenches for the vias are formed, followed by a subsequent etching step in which the via trenches are protected by a resist and in which the electrode and/or bond pad openings are formed. After resist removal, the via trenches and electrode and/or bond pad openings may be filled with the metal in any suitable manner. The metal stack may be subsequently planarized, e.g. by means of a CMP step. On top of the resultant structure, a diffusion barrier layer 131, e.g. a SiC layer may be deposited to avoid any photo-resist poisoning in the subsequent photolithography step.

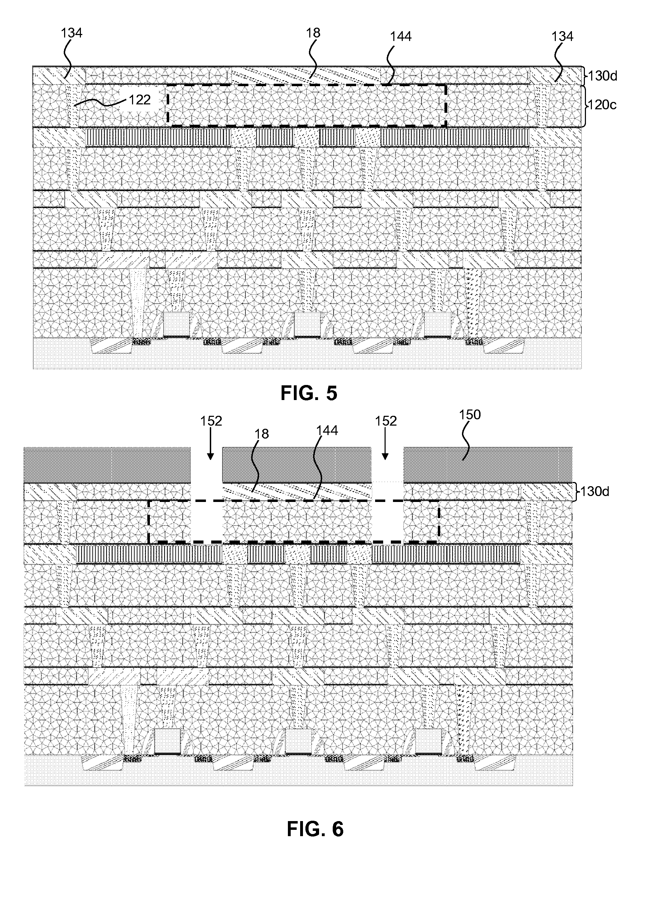

The resultant structure is shown in FIG. 5. The Metal-4 layer 130d contains source/drain contacts 134 connected to underlying metallization structures through vias 122 as well as a counter electrode portion 18 that faces the working electrode portions 16 in the underlying Metal-3 layer 130c. Preferably, the electrode portions 16 and reference electrode portion 18 are made of the same material to avoid the occurrence of battery effects between these electrodes.

At this point, the attention is drawn to the highlighted area 144 of the Via-3 layer 120c. This area, which separates the electrode portions 16 from the counter electrode portion 18, is an area that will be removed from the Via-3 layer 120c in subsequent processing steps in order to form a fluid channel in between the electrode portions 16 and the counter electrode portion 18. For this reason, the region 144 of the Via-3 layer 120c intended for removal in subsequent processing steps will be referred to as the sacrificial region 144.

In a next step, the resultant structure of FIG. 5 is masked using a suitable mask material 150, in which the counter electrode portion 18 and the source/drain contacts 134 are protected by the mask 150. Trenches 152 are subsequently etched through the Metal-4 layer 130d and the Via-3 layer 120c to provide access to the sacrificial region 144. This is shown in FIG. 6. This for instance may be done using any suitable dry etch recipe. As it is well known per se to the skilled person how to perform an isotropic dry etch through a dielectric material such as SiO₂, the dry etch recipe will not be discussed in further detail for reasons of brevity only. The underlying Si₃N₄ layer 140 and metal portions 16 and 134 can be used as an etch stop layer for the formation of the access trenches 152. In other words, the underlying Si₃N₄ layer 140 and metal portions 16 and 134 are inert to the etch recipe used to form the access trenches 152.

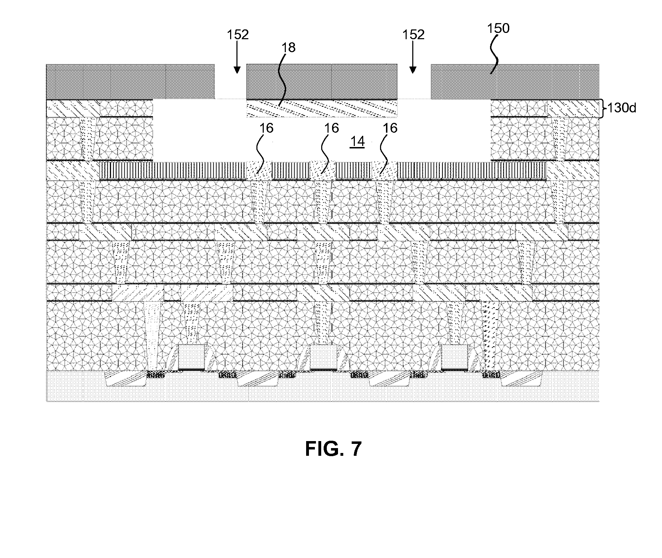

In a next step, as shown in FIG. 7, the remainder of the sacrificial region 144 is removed preferably by using the same etch recipe as used for the formation of the access trenches 152. In order to laterally remove the dielectric layer(s) in the Via-3 layer 120c, the wafer of which the substrate 10 forms a part is subjected to a bias voltage during the etching step. Optimal results have been obtained for a bias voltage of 0V. The result is the formation of a fluid chamber 14 in between the electrode portions 16 and the counter electrode portion 18, which may be accessed through access trenches 152. In other words, the combination of the access trenches 152 and the fluid chamber 14 form a flow channel through the BEOL metallization stack, with the respective surfaces of the one or more working electrodes 16 and the reference electrode 18 in the flow channel exposed to the flow channel.

In subsequent processing steps (not shown), the photo resist and, if applicable, polymer residues formed during a dry etch process are removed, e.g. by means of dry and wet strips, as well as the diffusion barrier layer 121 from the upper metal portions, e.g. reference electrode portion 18 and source/drain contacts 134. In addition, the electrode portions 16 may be functionalized by guiding a suitable receptor molecule composition through the fluid chamber 14 for self-assembly on the electrode portions 16.

It is worth mentioning that as the electrode portions 16 and the reference electrode portion 18 are both exposed in the fluid chamber 14, functionalization of the surface of the reference electrode 18 may be difficult to avoid when functionalizing the surface of the electrode portions 16, especially when the reference electrode portion 18 and the electrode portions 16 have a comparable affinity to the functionalization composition, e.g. a SAM-forming composition, which for instance is the case if the reference electrode portion 18 and the electrode portions 16 are made of the same conductive material, e.g. copper.

In order to ensure that such an arrangement is capable of producing meaningful measurements, the available surface of the counter electrode portion 18 may be kept smaller than the sum of areas of the associated electrode portions 18 such that a specific binding event occurring at both the reference electrode portion 18 and the associated electrode portions 16 still yields a reproducible signal from which the concentration of an analyte of interest can be evaluated.

To this end, a counter electrode portion 18 may for instance be designed as narrow as possible e.g. having a wire shape, and can be made facing a plurality of electrodes portions 16 having a combined area that is larger than the area of the counter electrode portion 18, e.g. several times larger. In an embodiment, a plurality of electrode portions 18 are conductively interconnected in order to achieve a single working electrode that is bigger in area than the counter electrode portion 18.

Alternatively, the electrode portions 18 and reference electrode portion 18 may be made from different materials that have substantially different affinities to being functionalized such that only the electrode portions 16 are functionalized. In this embodiment, the different materials should be carefully selected such that galvanic (battery) effects originating from the different redox potentials of the materials are minimized, i.e. materials having comparable redox potentials should preferably be selected.

At this point, it is noted that it should be apparent to the skilled person that many variations may be made to the above process without departing from the present invention. For instance, suitable materials other than SiO₂, Si₃N₄ and SiC may be used. Also, the electrode portion(s) 16 and the reference electrode portion 18 may be formed in any suitable combination of adjacent metallization layers, i.e. other layers than the Metal-3 and Metal-4 layers. In addition, any suitable number of electrode portions 16 may be included in the fluid chamber 14. An IC may be formed that comprises a plurality of fluid chambers 14, each having their own electrode portions 16 and a reference electrode portion 18. Alternatively, a reference electrode portion 18 may be dimensioned such that it is shared by at least two fluid chambers 14.

It is further noted that the fluid chamber 14 may be formed in the BEOL metallization stack in other suitable ways. For instance, the Via-3 layer 120c may be patterned to form a cavity having the shape and dimensions of the fluid chamber 14, which cavity may be filled with a thermally decomposable material such as a thermally decomposable polymer (TDP), after which the metal portions of the Metal-4 layer may be formed in any suitable manner. For instance, such metal portions may be formed using a lift-off process, which is known per se and will therefore not be explained in further detail for the sake of brevity. A non-limiting example of such a TDP is polynorbornene. Following the formation of the access trenches 152, the resultant structure may be heated to a temperature above the thermal decomposition temperature of the thermally decomposable material to form the fluid chamber 14 in between the electrode portions 16 and the reference electrode portion 18.

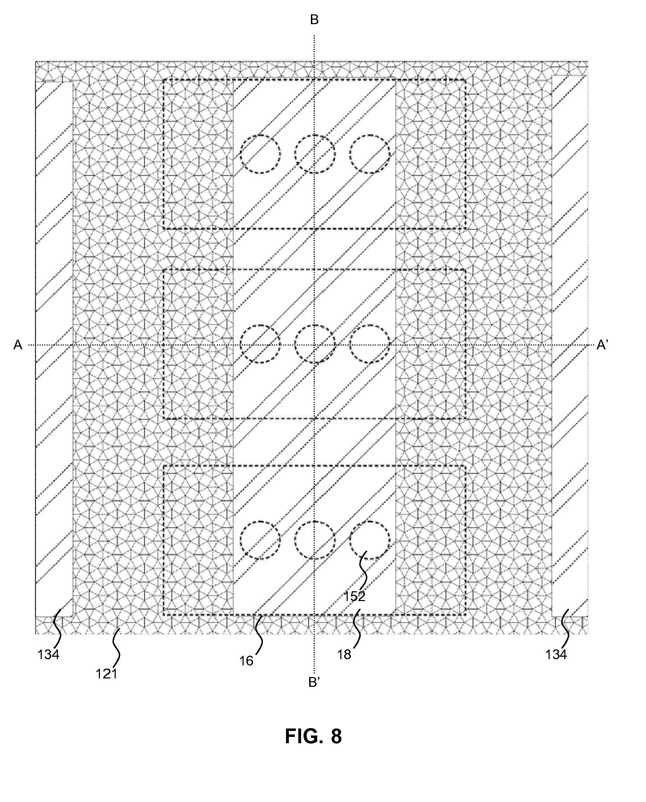

The resulting sensor device 10 is shown in FIG. 8-10. FIG. 8 shows a top view of the sensor device 10 after sawing the wafer to individualize the sensor devices 10. The source/drain contacts 134 can be seen at the perimeter of the device, and are separated from the reference electrode portion 18 in the centre of the device by insulating layer 121, which may be any suitable material such as SiO₂ The access trenches 152 to the various fluid chambers inside the BEOL stack can also be seen. The perimeter of the fluid chambers 14 is indicated by the dashed boxes. In this embodiment, the reference electrode portion 18 is shared by a number of fluid chambers. It is reiterated that alternative embodiments in which each fluid chamber has a separate reference electrode portion 18 is equally feasible.

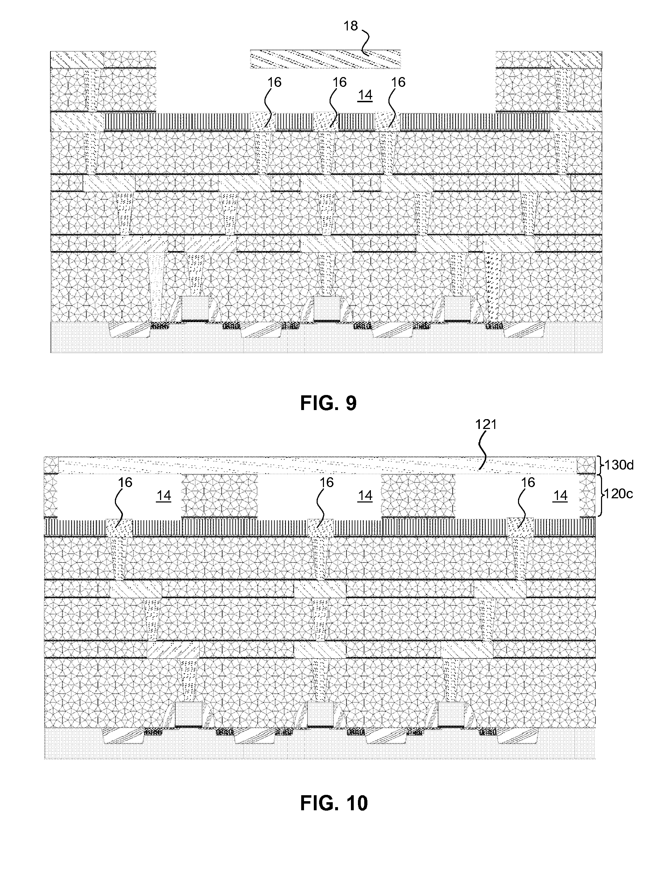

FIG. 9 shows a cross-section of the sensor device 10 along the line A-A' of FIG. 8. The fluid chamber 14, access trenches 152, working electrode portions 16 and reference electrode portion 18 can be readily recognized. FIG.10 shows a cross-section of the sensor device 10 along the line B-B' of FIG. 8. The separate fluid chambers 14 formed in Via-3 layer 120c with the respective electrode portions 16 conductively connected to underlying active devices 110 can be recognized, as can the dielectric material layer 121 partially sealing the fluid chambers 14.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A sensor device (10) comprising a substrate (100) carrying a sensing element (110), and a metallization stack on said substrate for providing interconnections to said sensing element, the metallization stack comprising:
a plurality of patterned metal layers (130a-d) separated by insulating layers (120a-d), wherein a first metal layer (130c) comprises an electrode portion (16) conductively connected to the sensing element, and a further metal layer (130d) facing the first metal layer comprises a reference electrode portion (18), the electrode portion and the reference electrode portion being separated by a fluid channel (14) accessible from the top of the metallization stack.

2. The sensor device (10) of claim 1, wherein the further metal layer (130d) is further removed from the substrate (10) than the first metal layer (130c).

3. The sensor device (10) of claim 2, wherein the further metal layer (130d) is the upper metal layer.

4. The sensor device (10) of any of claims 1-3, wherein the surface of the electrode portion (16) facing the fluid channel (14) carries at least one bioreceptor molecule.

5. The sensor device (10) of any of claims 1-4, wherein the substrate (100) carries a plurality of sensing elements (110) each conductively connected to a respective electrode portion (16) in the first metal layer (130c).

6. The sensor device (10) of claim 5, wherein at least some of the respective electrode portions (16) are located in a separate fluid channel (14).

7. The sensor device (10) of claim 6, wherein each separate fluid channel (14) comprises a counter electrode portion (18) facing the electrode portion (16).

8. The sensor device (10) of any of the preceding claims, wherein the electrode portion (16) and the counter electrode portion (18) are of the same metal.

9. A method of manufacturing a sensor device (10), comprising:
providing a substrate (100) carrying a sensing element (110); and
forming a metallization stack on said substrate for providing interconnections to said sensing element, wherein the step of forming said metallization stack comprises:
forming a conductive connection (124) through a previously deposited insulation layer (120b) to establish a conductive connection with the sensing element;
forming a first patterned metal layer (130c) over the previously deposited insulation layer, said patterned metal layer including an electrode portion (16) in conductive contact with the conductive connection (124);
depositing a further layer stack (120d, 130d) including a further insulation layer (120d) over the first patterned metal layer, the further insulation layer comprising a sacrificial region (144) over the electrode portion;
patterning an upper portion (120d) of the further layer stack to form a counter electrode opening to the sacrificial region;
filling the counter electrode opening with a second metal, thereby forming a counter electrode portion (18) separated from the electrode portion by the sacrificial region;
providing an access (152) to the sacrificial region through at least a part of the further layer stack; and
forming a fluid channel (14) between the electrode portion and the counter electrode portion by removing the sacrificial region through said access.

10. The method of claim 9, wherein the steps of forming a conductive connection (124) through a previously deposited insulation layer (120c) and forming a first patterned metal layer (130c) comprise:
depositing an etch stop layer (140) over the previously deposited insulation layer;
patterning said etch stop layer to at least form an electrode opening in the etch stop layer;
forming the conductive connection through said electrode opening; and
filling the electrode opening with a first metal, thereby providing the electrode portion (16) conductively connected to the sensing element through the previously deposited insulation layer.

11. The method of claim 10, wherein the sacrificial region (144) is removed by etching, the method further comprising biasing the wafer at 0V during the removal of the sacrificial region.

12. The method of claim 9, wherein the sacrificial region (144) comprises a thermally decomposable material, and wherein the step of removing the sacrificial region through said access (152) comprises heating the wafer to above the decomposition temperature of the decomposable material until the decomposable material has fully decomposed.

13. The method of any of claims 9-12, wherein the electrode portion (16) and the further electrode portion (18) are of the same metal.

14. The method of any of claims 9-13, wherein the substrate (100) carries an array of sensing elements (110), and wherein the method comprises:
providing an electrode portion (16) to each sensing element; and
providing a separate fluid channel (14) for each electrode portion.

15. The method of any of claims 9-14, further comprising:
exposing the fluid channel (14) to a composition including a bioreceptor; and
adhering the bioreceptor to the electrode portion (16).

## Amended claims

### Amended claims in accordance with Rule 137(2) EPC.

**8.** The sensor device (10) of any of the preceding claims, wherein the electrode portion (16) and the counter electrode portion (18) are of the same metal.

**9.** A method of manufacturing a sensor device (10), comprising:
providing a substrate (100) carrying a sensing element (110); and
forming a metallization stack on said substrate for providing interconnections to said sensing element, wherein the step of forming said metallization stack comprises:
forming a conductive connection (124) through a previously deposited insulation layer (120b) to establish a conductive connection with the sensing element;
forming a first patterned metal layer (130c) over the previously deposited insulation layer, said patterned metal layer including an electrode portion (16) in conductive contact with the conductive connection (124);
depositing a further layer stack (120c, 130d) including a further insulation layer (120c) over the first patterned metal layer, the further insulation layer comprising a sacrificial region (144) over the electrode portion;
patterning an upper portion (130d) of the further layer stack to form a counter electrode opening to the sacrificial region;
filling the counter electrode opening with a second metal, thereby forming a counter electrode portion (18) separated from the electrode portion by the sacrificial region;
providing an access (152) to the sacrificial region through at least a part of the further layer stack; and
forming a fluid channel (14) between the electrode portion and the counter electrode portion by removing the sacrificial region through said access.

**10.** The method of claim 9, wherein the steps of forming a conductive connection (124) through a previously deposited insulation layer (120b) and forming a first patterned metal layer (130c) comprise:
depositing an etch stop layer (140) over the previously deposited insulation layer;
patterning said etch stop layer to at least form an electrode opening in the etch stop layer;
forming the conductive connection through said electrode opening; and
filling the electrode opening with a first metal, thereby providing the electrode portion (16) conductively connected to the sensing element through the previously deposited insulation layer.

**11.** The method of claim 10, wherein the sacrificial region (144) is removed by etching, the method further comprising biasing the wafer at 0V during the removal of the sacrificial region.

**12.** The method of claim 9, wherein the sacrificial region (144) comprises a thermally decomposable material, and wherein the step of removing the sacrificial region through said access (152) comprises heating the wafer to above the decomposition temperature of the decomposable material until the decomposable material has fully decomposed.

**13.** The method of any of claims 9-12, wherein the electrode portion (16) and the further electrode portion (18) are of the same metal.

**14.** The method of any of claims 9-13, wherein the substrate (100) carries an array of sensing elements (110), and wherein the method comprises:
providing an electrode portion (16) to each sensing element; and
providing a separate fluid channel (14) for each electrode portion.
